# EUROPEAN PATENT APPLICATION

(11) **EP 4 814 770 A1**
(43) Date of publication of application: **30.09.2026**
(21) Application number: 25745012.2
(22) Date of filing: 09.01.2025
(51) Int. Cl.: G06F 21/62, G06F 21/31

(54) **MULTI-TENANT SYSTEM, ACCESS CONTROL METHOD, AND PROGRAM**

(30) Priority: 26.01.2024 JP 2024010278
(71) Applicant: Cybozu, Inc., Tokyo 103-6027 (JP)
(72) Inventor: YAMAMOTO, Hirotaka, Tokyo 103-6027 (JP)
(74) Representative: Grünecker Patent- und Rechtsanwälte PartG mbB
(86) International application number: PCT/JP2025/000571
(87) International publication number: WO 2025/158929

(57) **Abstract**

In a multi-tenant system (1), data of each of a plurality of tenants is managed by a regional system (30) of one of a plurality of regions, and a sub-domain is assigned to each of the plurality of tenants. A reception module (201) receives, from a computer (50), a request including the sub-domain that is assigned to one of the plurality of tenants. An identification module (202) identifies, when the request is received, an access destination regional system that is the regional system (30) and that manages the data of the tenant to which the sub-domain included in the request is assigned. An access control module (203) enables the computer (50) to access the access destination regional system.

## Description

### Technical Field

The present disclosure relates to a multi-tenant system, an access control method, and a program.

### Background Art

There has hitherto been known a multi-tenant system in which a plurality of tenants share a common resource (for example, a server, storage, or an application). In Non-Patent Literature 1, for example, there is described a multi-tenant system in which a URL map associates each of a plurality of URLs with a routing destination of a request including the URL, and the request is routed to a back-end service appropriate for the request out of a plurality of back-end services, based on the URL map.

In Patent Literature 1, for example, there is described a multi-tenant system including an authentication server arranged in each of a plurality of regions, an integrated entrance server which provides a login page, and a client in which a browser is installed. The multi-tenant system of Patent Literature 1 identifies a region to which a user belongs, in response to reception of user information input by the user via the login page on the browser, and enables the client to access the authentication server relevant to the identified region.

In Patent Literature 2, for example, there is described a multi-tenant system in which a request from a user is terminated at a tenant specific application that is an application prepared for a tenant, and sub-domains are managed as identification information of tenants. When a server name of a tenant is a fully qualified domain name (FQDN) in an inquiry from a user, the multi-tenant system of Patent Literature 2 calls a tenant specific application for a tenant identified by a sub-domain in the FQDN.

### Citation List

### Non Patent Literature

[NPL 1] "External Application Load Balancer overview," Internet, retrieved on July 31, 2023, online, https://cloud.google.com/load-balancing/docs/https?hl=ja#url-maps

### Patent Literature

[PTL 1] JP 2019-101668 A
[PTL 2] JP 2022-168948 A

### Summary of Invention

### Technical Problem

In some multi-tenant systems, for example, data of each of a plurality of tenants is managed in a regional system of one of a plurality of regions. Further, in those multi-tenant systems, a sub-domain may be assigned to each of the plurality of tenants. When receiving a request from a computer, a multi-tenant system of this type is required to enable the computer to access an appropriate regional system.

However, the URL map of Non-Patent Literature 1 is not created with a focus on the sub-domain assigned to each tenant. Routing destinations defined in the URL map are also not based on regions. For that reason, the technology of Non-Patent Literature 1 is incapable of appropriate access control in a multi-tenant system of the type as described above. The technology of Patent Literature 1 merely arranges the authentication server in each region. The technology of Patent Literature 2 does not implement data management that focuses on regions. Accordingly, as is the case for the technology of Non-Patent Literature 1, the technologies of Patent Literature 1 and Patent Literature 2 are incapable of appropriate access control in a multi-tenant system of the type as described above.

One object of the present disclosure is to perform appropriate access control in a case in which data of each of a plurality of tenants is managed by a regional system of one of a plurality of regions and a sub-domain is assigned to each of the plurality of tenants.

### Solution to Problem

According to one embodiment of the present disclosure, there is provided a multi-tenant system in which data of each of a plurality of tenants is managed by a regional system of one of a plurality of regions, and a sub-domain is assigned to each of the plurality of tenants, the multi-tenant system including: a reception module configured to receive, from a computer, a request including the sub-domain that is assigned to one of the plurality of tenants; an identification module configured to identify, when the request is received, an access destination regional system that is the regional system and that manages the data of the one of the plurality of tenants to which the sub-domain included in the request is assigned; and an access control module configured to enable the computer to access the access destination regional system.

### Advantageous Effects of Invention

According to the present disclosure, appropriate access control can be performed in a case in which data of each of a plurality of tenants is managed by a regional system of one of a plurality of regions and a sub-domain is assigned to each of the plurality of tenants.

### Brief Description of Drawings

FIG. 1 is a diagram for illustrating an example of a hardware configuration of a multi-tenant system.
FIG. 2 is a view for illustrating an example of a page of a URL including a sub-domain that is assigned to a tenant.
FIG. 3 is a diagram for illustrating an example of access control executed in the multi-tenant system.
FIG. 4 is a diagram for illustrating an example of functions implemented by the multi-tenant system.
FIG. 5 is a table for showing an example of a domain map.
FIG. 6 is a table for showing an example of an address database.
FIG. 7 is a diagram for illustrating an example of processing executed in the multi-tenant system.
FIG. 8 is a diagram for illustrating an example of a hardware configuration in modification examples.
FIG. 9 is a diagram for illustrating an example of functions implemented in the modification examples.
FIG. 10 is a diagram for illustrating an example of access control in Modification Example 6.

### Description of Embodiments

### [1. Hardware Configuration of Multi-Tenant System]

An example of a multi-tenant system, an access control method, and a program according to an embodiment of the present disclosure is described. The multi-tenant system is a system that provides a plurality of tenants with a service based on a common resource among the plurality of tenants. A tenant is a client entity of the service. For example, a tenant is a company, a government agency, another organization, or an individual. The resource is a tangible object or an intangible asset that is used to provide the service. For example, the resource is a computer, a communication device, a memory, another type of hardware, software, or a database.

In this embodiment, cloud-based groupware is described as an example of the service provided by the multi-tenant system. The groupware supports work of tenants. For example, the groupware provides tenants with various functions such as a schedule management function, a communication function including conversational threading, or a data management function that uses a database. In a case of a tenant that is an organization, the groupware supports work of each of a plurality of users (for example, employees of a company) who belong to the organization that is the tenant. In a case of a tenant that is an individual, the individual who is the tenant corresponds to a user of the groupware.

The service provided by the multi-tenant system may be any service of a multi-tenant type. The service provided by the multi-tenant system is not limited to groupware. For example, the multi-tenant system may provide a data management service which manages data on a cloud, a shared email service which manages shared email, a service of a communication tool such as chat, an SNS, or another service. "Groupware" in the description of this embodiment can be read as any other service.

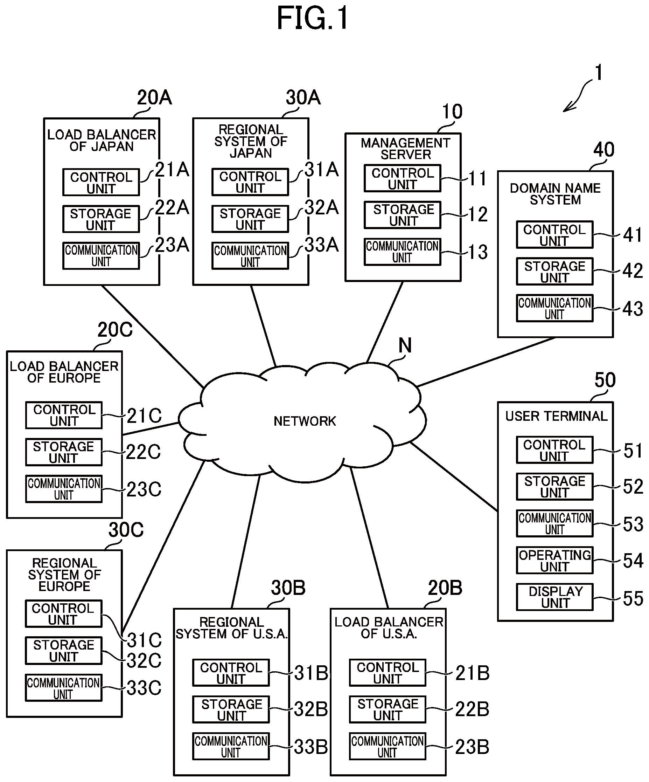

FIG. 1 is a diagram for illustrating an example of a hardware configuration of the multi-tenant system. A multi-tenant system 1 includes, for example, a management server 10, a load balancer 20A of Japan, a load balancer 20B of the United States of America (U.S.A.), a load balancer 20C of Europe, a regional system 30A of Japan, a regional system 30B of the U.S.A., a regional system 30C of Europe, a domain name system 40, and a user terminal 50. Those are connected to a network N which is the Internet, a LAN, or the like.

In the following, the load balancer 20A of Japan, the load balancer 20B of the U.S.A., and the load balancer 20C of Europe may be written simply as "load balancers 20" without discriminating one from another by omitting the suffixed alphabet letters from the reference symbol. For the same reason, control units 21A, 21B, and 21C, storage units 22A, 22B, and 22C, and communication units 23A, 23B, and 23C may be written as "control units 21," "storage units 22," and "communication units 23," respectively, by omitting the suffixed alphabet letters from the reference symbols.

The regional system 30A of Japan, the regional system 30B of the U.S.A., and the regional system 30C of Europe may be written simply as "regional systems 30" without discriminating one from another by omitting the suffixed alphabet letters from the reference symbol. For the same reason, control units 31A, 31B, and 31C, storage units 32A, 32B, and 32C, and communication units 33A, 33B, and 33C may be written as "control units 31, " "storage units 32," and "communication units 33," respectively, by omitting the suffixed alphabet letters from the reference symbols. FIG. 1 is an example of the hardware configuration of the multi-tenant system 1 and, in this embodiment, the user terminal 50 does not directly access the regional system 30 via the network N.

The management server 10 is a server computer which manages groupware in an integrated manner. For example, the management server 10 includes a control unit 11, a storage unit 12, and a communication unit 13. The control unit 11 includes at least one processor. The storage unit 12 includes at least one of a volatile memory such as a RAM, or a non-volatile memory such as a flash memory. The communication unit 13 includes at least one of a communication interface for wired communication or a communication interface for wireless communication.

A program to be stored in the storage unit 12 may be supplied to the management server 10 via the network N. The management server 10 may include at least one of a reading unit (for example, a memory card slot) for reading an information storage medium or an input and output unit (for example, a USB terminal) for connecting to an information storage medium. In this case, a program stored in an information storage medium may be supplied to the management server 10 via at least one of the reading unit or the input and output unit.

The load balancers 20 are devices for executing access control (routing) in the groupware. The load balancers 20 are arranged for the purpose of implementing load balancing in some cases but, in this embodiment, are arranged for the purpose of implementing appropriate access control rather than load balancing. In this embodiment, the load balancers 20 do not particularly execute processing for load balancing, but may execute processing for load balancing.

Examples of the load balancers 20 include server computers, personal computers, data storage, and communication devices, or combinations thereof. The load balancers 20 may have a publicly-known hardware configuration. The load balancers 20 include, for example, the control units 21, the storage units 22, and the communication units 23. The control units 21, the storage units 22, and the communication units 23 may have the same hardware configurations as the hardware configurations of the control unit 11, the storage unit 12, and the communication unit 13, respectively.

The plurality of load balancers 20 are arranged in regions different from one another. This embodiment takes, as an example, a case in which Japan, the U.S.A., and Europe each correspond to a region. The region may be an area that is large to some degree, such as a continent, a country, a state, a prefecture, a city, a ward, a town, or a village. The region is not limited to the example of this embodiment. In the description of this embodiment, "Japan," "the U.S.A.," or "Europe" can be read as any other region.

This embodiment takes, as an example, a case in which one of the load balancers 20 is arranged in one region, but a plurality of load balancers 20 may be arranged in one region. Further, the number of regions in which the load balancers 20 are arranged is not limited to three of this embodiment. The number of regions in which the load balancers 20 are arranged may be two or four or more. As is the case for the management server 10, a program to be stored in the load balancers 20 may be supplied to the load balancers 20 via the network N, reading units, or input and output units.

The regional systems 30 are systems for managing data of tenants. Each of the regional systems 30 manages the data so that laws and regulations of a local government in which the regional system 30 is arranged, requests from public offices, or other rules are observed. Examples of the regional systems 30 include server computers, personal computers, data storage, and communication devices, or combinations thereof. The regional systems 30 include the control units 31, the storage units 32, and the communication units 33. The control units 31, the storage units 32, and the communication units 33 may have the same hardware configurations as the hardware configurations of the control unit 11, the storage unit 12, and the communication unit 13, respectively.

The plurality of regional systems 30 are arranged in regions different from one another. This embodiment takes, as an example, a case in which the regional systems 30 are arranged in the same regions as the regions of the load balancers 20, but the multi-tenant system 1 may be designed so that the regional systems 30 are not arranged in the same regions as the regions of the load balancers 20. For example, as long as the load balancers 20 are capable of mediation of communication between the regional systems 30 and the user terminal 50 at a communication speed that is high to some degree, the regional systems 30 may be arranged in regions different from the regions of the load balancers 20. In this case, one of the load balancers 20 that is closest to the user terminal 50 receives a request from the user terminal 50.

This embodiment takes, as an example, a case in which one of the regional systems 30 is arranged in one region, but a plurality of regional systems 30 may be arranged in one region. Further, the number of regions in which the regional systems 30 are arranged is not limited to three of this embodiment. The number of regions in which the regional systems 30 are arranged may be two or four or more. As is the case for the management server 10, a program to be stored in the regional systems 30 may be supplied to the regional systems 30 via the network N, reading units, or input and output units.

The domain name system 40 is a system for managing domain names. Examples of the domain name system 40 include a server computer, a personal computer, data storage, and a communication device, or combinations thereof. The domain name system 40 includes a control unit 41, a storage unit 42, and a communication unit 43. The control unit 41, the storage unit 42, and the communication unit 43 may have the same hardware configurations as the hardware configurations of the control unit 11, the storage unit 12, and the communication unit 13, respectively.

As is the case for the management server 10, a program to be stored in the domain name system 40 may be supplied to the domain name system 40 via the network N, a reading unit, or an input and output unit. Although one domain name system 40 is illustrated in FIG. 1, a plurality of domain name systems 40 may each be connected to the network N. For example, a plurality of domain name systems 40 may be arranged in the same regions as the regions of the load balancers 20 and the regional systems 30. In the example of this embodiment, the domain name system 40 may be arranged in each of Japan, the U.S.A., and Europe.

The user terminal 50 is a computer of a user who belongs to a tenant. For example, the user terminal 50 is a personal computer, a tablet computer, a smartphone, or a wearable terminal. The user terminal 50 includes a control unit 51, a storage unit 52, a communication unit 53, an operating unit 54, and a display unit 55. The control unit 51, the storage unit 52, and the communication unit 53 may have the same hardware configurations as the hardware configurations of the control unit 11, the storage unit 12, and the communication unit 13, respectively.

For example, the operating unit 54 is an input device such as a touch panel or a mouse. The display unit 55 is a liquid crystal display or an organic EL display. As is the case for the management server 10, a program to be stored in the user terminal 50 may be supplied to the user terminal 50 via the network N, a reading unit, or an input and output unit. Although one user terminal 50 is illustrated in FIG. 1, a plurality of user terminals 50 may each be connected to the network N.

It is sufficient for the multi-tenant system 1 to include at least one computer. Computers included in the multi-tenant system 1 are not limited to the example of FIG. 1. For example, the multi-tenant system 1 may include only one of the load balancers 20 that is in one of the plurality of regions. In this case, the management server 10, the load balancers 20 of the other regions, the regional systems 30, the domain name system 40, and the user terminal 50 exist outside of the multi-tenant system 1.

For example, the multi-tenant system 1 may include only one of the load balancers 20 that is in one of the plurality of regions and the domain name system 40. The multi-tenant system 1 may include only the management server 10 and one of the load balancers 20 that is in one of the plurality of regions. For example, the multi-tenant system 1 may include at least one of the regional systems 30A, 3B, and 3C. The multi-tenant system 1 may include some combination of computers out of the computers of FIG. 1, with the rest of the computers existing outside of the multi-tenant system 1.

In a case in which the present disclosure is a document to be filed to the Japan Patent Office, for example, the multi-tenant system 1 may include only the load balancer 20A of Japan. An embodiment in which the multi-tenant system 1 includes functions of the load balancer 20A of Japan alone is also within a scope of the present disclosure. In a case in which the present disclosure is a document to be filed to the United States Patent and Trademark Office, the multi-tenant system 1 may include only the load balancer 20B of the U.S.A. An embodiment in which the multi-tenant system 1 includes functions of the load balancer 20B of the U.S.A. alone is also within a scope of the present disclosure. The same applies to other regions, and an embodiment in which the multi-tenant system 1 includes only functions implemented by one of the load balancers 20 of one region is within a scope of the present disclosure.

### [2. Overview of Multi-Tenant System]

In this embodiment, data of each of a plurality of tenants is managed by one of the regional systems 30 in one of a plurality of regions, and a sub-domain is assigned to each of the plurality of tenants. For example, the regional systems 30 manage data registered by users who belongs tenants. The data managed by the regional systems 30 may be of any type. For example, the regional systems 30 manages document files, image files, audio files, a database in the groupware, messages exchanged with use of a communication tool, authentication information for logging in, information of each tenant, information of each user, or other types of data.

A tenant is assigned a sub-domain for enabling a user who belongs to the tenant to use the groupware. The sub-domain may be fixed in order to prevent a user who belongs to the tenant from changing the sub-domain, but this embodiment takes, as an example, a case in which the user can change the sub-domain after the fact. For example, when a user inputs a URL including a sub-domain assigned to a tenant to which the user belongs, from the operating unit 54, in order to use the groupware, the user terminal 50 displays a page of the URL on the display unit 55.

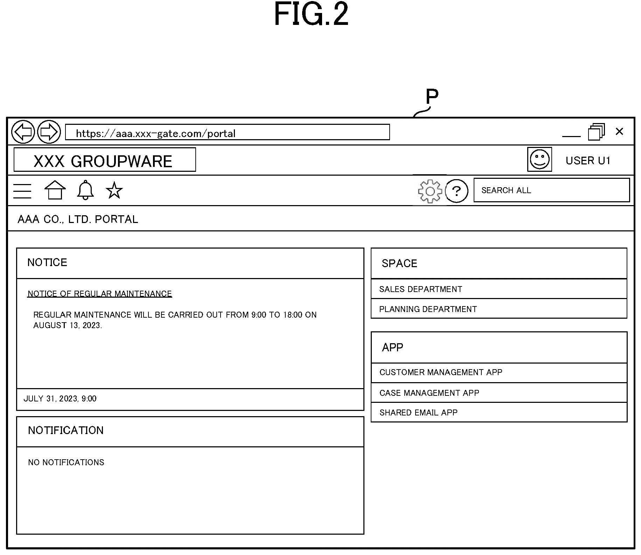

FIG. 2 is a view for illustrating an example of a page of a URL including a sub-domain that is assigned to a tenant. This embodiment takes, as an example, a case in which a page P is displayed on a browser installed in the user terminal 50, but the page P may be displayed on another program which is a program other than a browser. The other program may be, for example, a program dedicated to the groupware. The other program may be capable of calling up a browser by utilizing a function called WebView.

Generally, terms "domain" and "sub-domain" have no unique and clear definition set thereto, and there are various definitions. This embodiment takes, as an example, a case in which, out of a character string arranged between "://" immediately after a protocol name in a URL and the next "/", a part following the first "." is the domain and a part preceding the first "." is the sub-domain. In the example of FIG. 2, the character string is "aaa.xxx-gate.com," a part of the character string that follows the first ".", namely, "xxx-gate.com," is the domain, a part of the character string that precedes the first ".", namely, "aaa," is the sub-domain, and this case is discussed as an example.

According to one of existing definitions of "domain" and "sub-domain," entirety of a character string arranged between "://" immediately after a protocol name in a URL and the next "/" is the domain, and a part of the character string that precedes the first "." is the sub-domain. This definition may be applied to this embodiment. When this definition is applied to the example of FIG. 2, the entirety of the character string "aaa.xxx-gate.com" is the domain, and a part of the character string "aaa.xxx-gate.com" that precedes the first ".", namely, "aaa," is the sub-domain. Another publicly-known definition of "domain" and "sub-domain" may be employed.

In the example of FIG. 2, the user has input, to the browser, a URL including a sub-domain "aaa" assigned to a tenant "AAA Co., Ltd." which is a place of work of the user. For example, the user terminal 50 displays, on the display unit 55, the page P of cloud-based groupware for which the tenant "AAA Co., Ltd." has signed up. The user terminal 50 can access one of the plurality of regional systems 30 that manages data of the tenant "AAA Co., Ltd." which is the user's place of work, to thereby display the data on the page P and download the data. Logging in to the groupware may be executed by the regional system 30, or by another computer such as the management server 10.

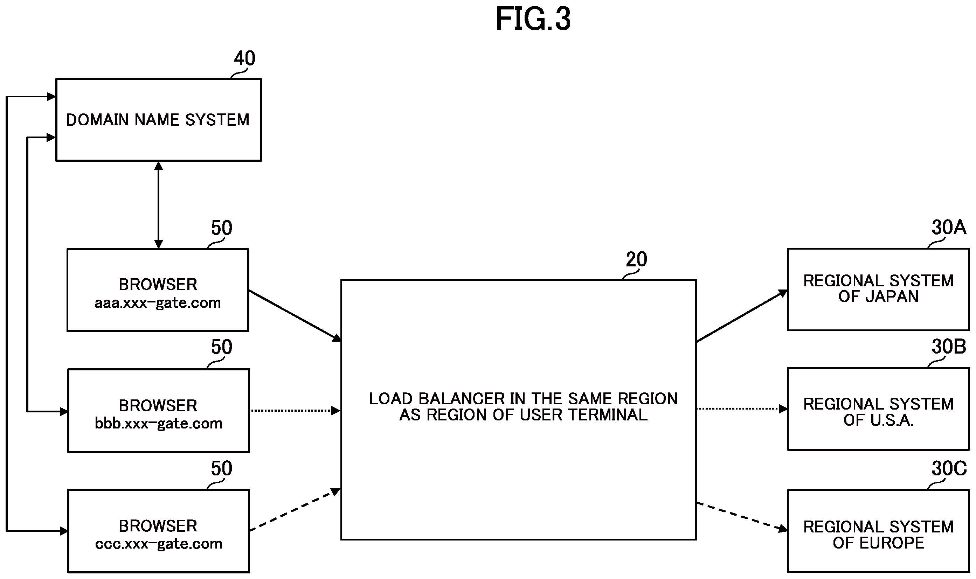

FIG. 3 is a diagram for illustrating an example of access control executed in the multi-tenant system 1. For example, the user terminal 50 of a user located in one region uses the domain name system 40 to execute name resolution of a URL input by the user on the browser, and acquires an address of one of the regional systems 30 that is associated with a sub-domain included in the URL. The user terminal 50 transmits a request including the URL specified by the user and the address acquired from the domain name system 40 to one of the plurality of load balancers 20 that is in the region in which the user is located. The load balancer 20 enables the user terminal 50 to access the regional system 30 that is indicated by the address.

The data of the tenant "AAA Co., Ltd." is assumed to be managed by, for example, the regional system 30A of Japan. When a user in Japan inputs a URL including the sub-domain "aaa" on the browser, the user terminal 50 uses the domain name system 40 to execute name resolution of the URL and acquires an address of the regional system 30A of Japan. The user terminal 50 transmits a request including the URL and the address of the regional system 30A of Japan to the load balancer 20A of Japan in which the user is located. The load balancer 20A of Japan receives the request and enables the user terminal 50 to access the regional system 30A of Japan which manages the data of the tenant to which the user belongs. In this case, communication is completed within Japan alone.

An example in which a user who belongs to the tenant "AAA Co., Ltd." goes on a business trip to the U.S.A. is discussed. When the user who has traveled to the U.S.A. on business inputs a URL including the sub-domain "aaa" on the browser, the user terminal 50 uses the domain name system 40 to execute name resolution of the URL and acquires the address of the regional system 30A of Japan. The user terminal 50 transmits a request including the URL and the address of the regional system 30A of Japan to the load balancer 20B of the U.S.A. in which the user is located. The load balancer 20B of the U.S.A. receives the request and enables the user terminal 50 to access the regional system 30A of Japan which manages the data of the tenant to which the user belongs. In this case, the user terminal 50 in the U.S.A. holds communication to and from the regional system 30A of Japan via the load balancer 20B of the U.S.A.

An example in which a user who belongs to the tenant "AAA Co., Ltd." goes on a business trip to Europe is discussed. When the user who has traveled to Europe on business inputs a URL including the sub-domain "aaa" on the browser, the user terminal 50 uses the domain name system 40 to execute name resolution of the URL and acquires the address of the regional system 30A of Japan. The user terminal 50 transmits a request including the URL and the address of the regional system 30A of Japan to the load balancer 20C of Europe in which the user is located. The load balancer 20C of Europe receives the request and enables the user terminal 50 to access the regional system 30A of Japan which manages the data of the tenant to which the user belongs. In this case, the user terminal 50 in Europe holds communication to and from the regional system 30A of Japan via the load balancer 20C of Europe.

The access control as described above applies to tenants other than the tenant "AAA Co., Ltd." as well. It is assumed that, in the example of FIG. 3, data of a tenant "BBB Co., Ltd." is managed by the regional system 30B of the U.S.A., and that a sub-domain "bbb" is assigned to the tenant "BBB Co., Ltd." When a user who belongs to the tenant "BBB Co., Ltd." inputs a URL including the sub-domain "bbb" on the browser, the user terminal 50 accesses the regional system 30B of the U.S.A. through access control by one of the plurality of load balancers 20 that is in a region in which the user is located, as indicated by the dotted arrow in FIG. 3.

It is assumed that, in the example of FIG. 3, data of a tenant "CCC Co., Ltd." is managed by the regional system 30C of Europe, and that a sub-domain "ccc" is assigned to the tenant "CCC Co., Ltd." When a user who belongs to the tenant "CCC Co., Ltd." inputs a URL including the sub-domain "ccc" on the browser, the user terminal 50 accesses the regional system 30C of Europe through access control by one of the plurality of load balancers 20 that is in a region in which the user is located.

As described above, in the multi-tenant system 1 according to this embodiment, data of each of the plurality of tenants is managed by one of the regional systems 30 in one of a plurality of regions, and a sub-domain is assigned to each of the plurality of tenants. When a request including a sub-domain that is assigned to a tenant is received from the user terminal 50, the multi-tenant system 1 enables the user terminal 50 to access one of the regional systems 30 that manages data of the tenant to which the sub-domain is assigned. In this manner, the multi-tenant system 1 achieves appropriate access control. The following is a description on details of the multi-tenant system 1.

### [3. Functions Implemented by Multi-Tenant System]

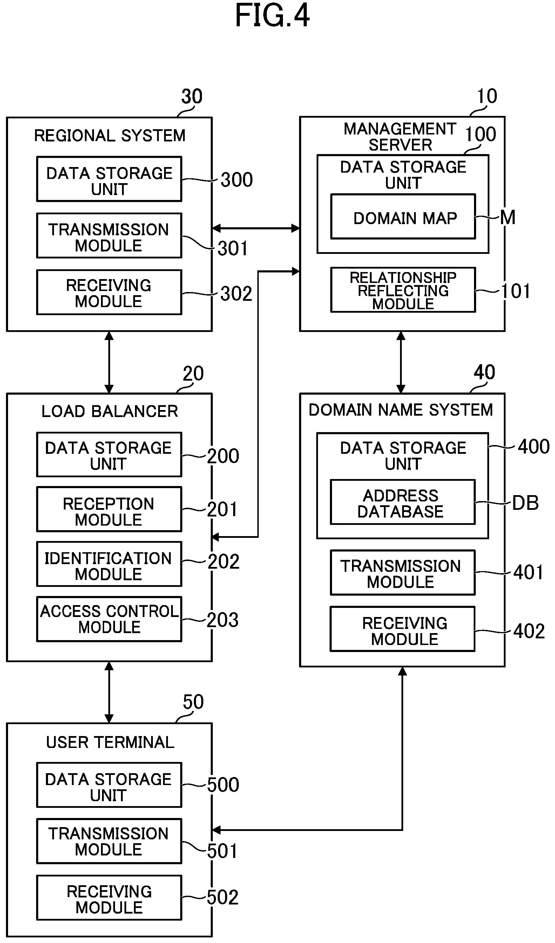

FIG. 4 is a diagram for illustrating an example of functions implemented by the multi-tenant system 1. Functions of the load balancer 20A, functions of the load balancer 20B, and functions of the load balancer 20C are the same as one another. Accordingly, in FIG. 4, the load balancers 20A, 20B, and 20C are illustrated as one load balancer 20. Similarly, functions of the regional systems 30A, 30B, and 30C are the same as one another and, accordingly, in FIG. 4, the regional systems 30A, 30B, and 30C are illustrated as one regional system 30.

### [3-1. Functions Implemented by Management Server]

The management server 10 includes, for example, a data storage unit 100 and a relationship reflecting module 101. The data storage unit 100 is implemented by the storage unit 12. The relationship reflecting module 101 is implemented by the control unit 11.

### [Data Storage Unit]

The data storage unit 100 stores data for management in the groupware. For example, the data storage unit 100 stores a domain map M which is a database with sub-domains of tenants stored therein. The domain map M may be stored in a data storage unit 200 of the load balancer 20. In this case, an update made to the domain map M of the data storage unit 100 is reflected in the domain map M of the data storage unit 100.

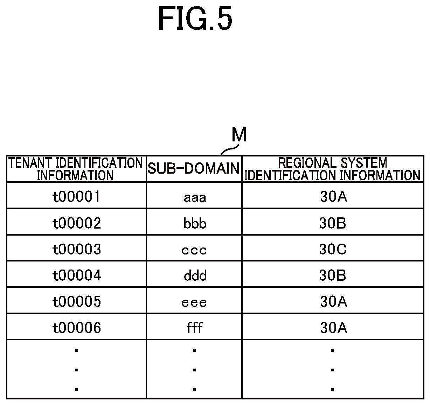

FIG. 5 is a table for showing an example of the domain map M. The domain map M stores, for example, tenant identification information, a sub-domain, and regional system identification information. Any data may be stored in the domain map M, and data stored in the domain map M is not limited to the example of FIG. 5. For example, the domain map M may store other types of information such as a name, an address, or a similar type of information about a tenant, information about an account or the like of a user who belongs to the tenant, or a history of changing sub-domains.

The tenant identification information is information by which computers can identify a tenant. This embodiment takes, as an example, a case in which the tenant identification information is not changed after the fact, but the tenant identification information may be changed after the fact. The tenant identification information may be, for example, a tenant ID assigned to the tenant, a name of the tenant, an email address of the tenant, a phone number of the tenant, or other types of information. A sub-domain associated with a piece of tenant identification information is a sub-domain assigned to the tenant that is identified by the piece of tenant identification information.

This embodiment takes, as an example, a case in which the tenant identification information and sub-domains have a one-to-one association relationship. That is, a case in which one sub-domain is assigned to one tenant is taken as an example. The tenant identification information and sub-domains may have a one-to-many association relationship, or a many-to-one association relationship. That is, a plurality of sub-domains may be assigned to one tenant, and one common sub-domain may be assigned to a plurality of tenants.

The regional system identification information is information by which computers can identify one of the regional systems 30. In this embodiment, the address of each of the regional systems 30 is identified by the domain name system 40, and the regional system identification information is accordingly information other than the address of each of the regional systems 30. For example, the regional system identification information of one of the regional systems 30 may be a name of the regional system 30, a name of a region in which the regional system 30 is arranged, or other types of information. The regional system identification information of one of the regional systems 30 may be an address of the regional system 30.

When a new tenant signs up for the groupware, for example, the management server 10 issues the tenant identification information of the new tenant in a manner that avoids duplication with the tenant identification information of another tenant. The management server 10 stores, in the domain map M, the issued tenant identification information, a sub-domain assigned to the new tenant, and the regional system identification information of one of the regional systems 30 that manages data of the new tenant.

In this embodiment, a case in which a new tenant specifies a sub-domain to be assigned to itself on its own is taken as an example. However, the management server 10 may automatically issue a sub-domain to be assigned to a new tenant. Similarly, although a case in which a new tenant specifies, on its own, which one of the regional systems 30 is to manage its data, or in which region its data is to be managed is taken as an example, the management server 10 may automatically determine, based on an address or a similar type of information about the new tenant, which one of the regional systems 30 is to manage data of the new tenant, or in which region data of the new tenant is to be managed.

Data stored in the data storage unit 100 is not limited to the domain map M. The data storage unit 100 may store any type of data. For example, the data storage unit 100 may store a database similar to an address database DB described later. The data storage unit 100 may store a database in which authentication information for enabling a user to log in to the groupware is stored. The data storage unit 100 may store a database in which basic information about a tenant is stored. The data storage unit 100 may store a database that stores, for each of the plurality of regional systems 30, an address or a similar type of information about the regional system 30. The data storage unit 100 may store a database in which various other types of information in the groupware are stored.

### [Relationship Reflecting Module]

The relationship reflecting module 101 operates so that, for each of the plurality of tenants, a relationship between a sub-domain assigned to the tenant and an address of one of the regional systems 30 that manages data of the tenant is reflected in the domain name system 40. When a new tenant signs up for the groupware, for example, the relationship reflecting module 101 transmits, to the domain name system 40, data that indicates domain information including a sub-domain assigned to the new tenant and an address of one of the regional systems 30 that manages data of the new tenant. The domain name system 40 updates the address database DB described later, based on the data transmitted from the relationship reflecting module 101.

### [3-2. Functions Implemented by Load Balancer]

Each of the load balancers 20 includes, for example, the data storage unit 200, a reception module 201, an identification module 202, and an access control module 203. The data storage unit 200 is implemented by the storage unit 22. The reception module 201, the identification module 202, and the access control module 203 are implemented by the control unit 21.

### [Data Storage Unit]

The data storage unit 200 stores data required for access control that is executed by the load balancer 20. For example, the data storage unit 200 may store a database similar to the address database DB described later. In this case, the user terminal 50 may transmit a request including a URL input by the user to the load balancer 20, without asking the domain name system 40 for the address of the regional system 30. The request in this case includes no address of the regional system 30. The identification module 202 described later may identify the address of the regional system 30 based on the database similar to the address database DB.

The data storage unit 200 may store, for example, a database similar to the domain map M. The database may further store addresses of the regional systems 30. In this case, the user terminal 50 may transmit a request including a URL input by the user to the load balancer 20, without asking the domain name system 40 for the address of the regional system 30. The request in this case includes no address of the regional system 30. The identification module 202 described later may identify the address of the regional system 30 based on the database similar to the domain map M.

### [Reception Module]

The reception module 201 receives, from a computer, a request including a sub-domain that is assigned to one of the plurality of tenants. This embodiment takes, as an example, a case in which the user terminal 50 corresponds to the computer. The computer may be any computer capable of transmitting a request. The computer is not limited to the user terminal 50. For example, the computer may be a computer arranged between one of the load balancers 20 and the user terminal 50, or a computer of another service (for example, different groupware) which cooperates with the groupware in this embodiment.

The request is a request for access to data of the tenant by the user terminal 50, and is a request for access to one of the regional systems 30 that manages data of the tenant by the user terminal 50. This embodiment takes, as an example, a case in which the reception module 201 receives an HTTP request from the user terminal 50, but the reception module 201 may receive the request in another format such as an FTP request or an SSH request. Those formats of the request may be formats defined by publicly-known communication protocols. The reception module 201 is capable of receiving the request in any communication protocol.

The user terminal 50 transmits, for example, a DNS request to the domain name system 40 to acquire the address of the regional system 30 from the domain name system 40. Routing is executed by a communication device in the network N so that the request for access to the regional system 30 by the user terminal 50 is transmitted to one of the load balancers 20 that is in the same region as a region in which the user terminal 50 is located. In this embodiment, a different sub-domain is assigned to each tenant, but a domain is common to a plurality of tenants. Routing in the network N may be executed so that a request including a domain common to a plurality of tenants is transmitted to one of the load balancers 20 that is in the same region as a region in which the user terminal 50 is located. Processing employed in a publicly-known load balancer is applicable to a series of processing steps up through reception of the request from the user terminal 50 by the reception module 201.

The request from the user terminal 50 may be received by the reception module 201 of one of the load balancers 20 that is in the same region as the region in which the user terminal 50 is located, based on, for example, a Cloud Load Balancing method provided by Google (trademark) LLC. The reception module 201 is capable of receiving the request from the user terminal 50 based on various other methods. In a case in which none of the load balancers 20 is arranged in the region in which the user terminal 50 is located, the request is received by the reception module 201 of one of the load balancers 20 that is in a region relatively close to the region in which the user terminal 50 is located (for example, a region closest to the region in which the user terminal 50 is located). Processing employed in a publicly-known load balancer is applicable to processing in this case as well.

### [Identification Module]

When the request is received by the reception module 201, the identification module 202 identifies an access destination regional system which is one of the regional systems 30 and which manages data of a tenant that is assigned a sub-domain included in the request. The access destination regional system is one of the plurality of regional systems 30 that is a destination of access by the user terminal 50. That is, the access destination regional system is one of the plurality of regional systems 30 that is to be accessed by the user terminal 50 under control of the access control module 203 described later.

In this embodiment, a relationship between a piece of domain information including a sub-domain and an address associated with the piece of domain information is defined in the domain name system 40. Further, before transmitting the request to the load balancer 20, the user terminal 50 transmits a DNS request to the domain name system 40 to acquire an address of the access destination regional system from the domain name system 40. Accordingly, when the request is received, the identification module 202 identifies the access destination regional system based on an address that is managed by the domain name system 40 and that is associated with the sub-domain included in the request. The request received from the user terminal 50 by the load balancer 20 includes the address acquired by the user terminal 50 from the domain name system 40. Accordingly, the identification module 202 identifies the access destination regional system by referring to the address included in the request (the address that is managed by the domain name system 40 and that is included in the request transmitted to the load balancer 20 by the user terminal 50).

### [Access Control Module]

The access control module 203 enables the user terminal 50 to access the access destination regional system identified by the identification module 202. In this embodiment, the access control module 203 enables the user terminal 50 to access the access destination regional system that is indicated by an address included in the request transmitted by the user terminal 50, because the user terminal 50 acquires the address of the access destination regional system from the domain name system 40 before transmitting the request to the load balancer 20. The access control module 203 executes routing (path control) of the user terminal 50 so that the user terminal 50 accesses the access destination regional system.

The access control module 203 transmits, for example, data transmitted by the user terminal 50, to the access destination regional system identified by the identification module 202. The access control module 203 transmits, to the user terminal 50, data managed by the access destination regional system identified by the identification module 202. That is, the access control module 203 mediates communication between the access destination regional system and the user terminal 50. The method of mediation itself may be a method employed by a publicly-known load balancer.

For example, the access control module 203 may mediate communication between the access destination regional system and the user terminal 50 based on the Cloud Load Balancing method provided by Google (trademark) LLC. The access control module 203 is capable of mediating communication between the access destination regional system and the user terminal 50 based on various other methods. Each time the user terminal 50 transmits the request, the load balancer 20 executes the processing by the reception module 201, the identification module 202, and the access control module 203, to thereby mediate communication between the access destination regional system and the user terminal 50.

### [3-3. Functions Implemented by Regional System]

Each of the regional systems 30 includes, for example, a data storage unit 300, a transmission module 301, and a receiving module 302. The data storage unit 300 is implemented by the storage unit 32. The transmission module 301 and the receiving module 302 are each implemented by the control unit 31.

### [Data Storage Unit]

The data storage unit 300 stores data of a tenant. The data of a tenant corresponds to, for example, content in the groupware. The data storage unit 300 stores data registered on the page P by a user who belongs to a tenant. The data of a tenant may be data other than the data corresponding to the content. For example, the data storage unit 300 may store a database that stores authentication information for enabling a user who belongs to a tenant to log in to the groupware. In this case, the database corresponds to the data of the tenant. The database stores information such as an account and a password of the user.

### [Transmission Module]

The transmission module 301 transmits various types of data to a computer that is a communication partner of the regional system 30. For example, the transmission module 301 transmits, to the user terminal 50 of a user who belongs to a tenant, data of the tenant via one of the load balancers 20 that is in a region in which the user terminal 50 is located.

### [Receiving Module]

The receiving module 302 receives various types of data from a computer that is a communication partner of the regional system 30. For example, the receiving module 302 receives, from the user terminal 50 of a user who belongs to a tenant, data of the tenant via one of the load balancers 20 that is in a region in which the user terminal 50 is located.

### [3-4. Functions Implemented by Domain Name System]

The domain name system 40 includes, for example, a data storage unit 400, a transmission module 401, and a receiving module 402. The data storage unit 400 is implemented by the storage unit 42. The transmission module 401 and the receiving module 402 are each implemented by the control unit 41.

### [Data Storage Unit]

The data storage unit 400 stores data required for management of domain names. For example, the data storage unit 400 stores the address database DB in which a piece of domain information and an address of a domain indicated by the piece of domain information are stored. The data storage unit 400 may store a database other than the address database DB.

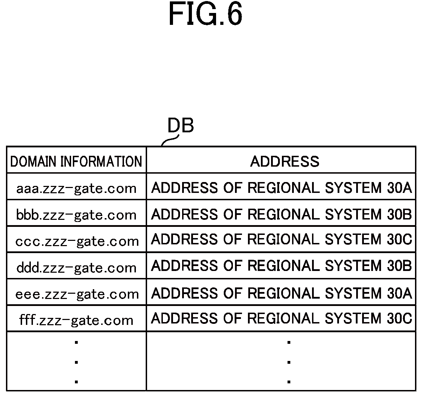

FIG. 6 is a table for showing an example of the address database DB. In the example of FIG. 6, the domain information indicates a sub-domain and a domain. The domain information may indicate a sub-domain alone. Information stored as the domain information may be publicly-known information. In this embodiment, "address" means an IP address. An address may be a virtual IP address. The address database DB may store domain information and an address of a domain other than domains of the groupware.

### [Transmission Module]

The transmission module 401 transmits various types of data to a computer that is a communication partner of the domain name system 40. For example, when the domain name system 40 receives a DNS request from the user terminal 50, the transmission module 401 transmits an address relevant to the DNS request to the user terminal 50, based on the address database DB.

### [Receiving Module]

The receiving module 402 receives various types of data from a computer that is a communication partner of the domain name system 40. For example, the receiving module 402 receives a DNS request from the user terminal 50.

### [3-5. Functions Implemented by User Terminal]

The user terminal 50 includes, for example, a data storage unit 500, a transmission module 501, and a receiving module 502. The data storage unit 500 is implemented by the storage unit 52. The transmission module 501 and the receiving module 502 are each implemented by the control unit 51.

### [Data Storage Unit]

The data storage unit 500 stores various types of data in the groupware. For example, the data storage unit 500 stores a browser. The data storage unit 500 may store a program dedicated to the groupware.

### [Transmission Module]

The transmission module 501 transmits various types of data to a computer that is a communication partner of the user terminal 50. For example, the transmission module 501 transmits a DNS request to the domain name system 40. The transmission module 501 transmits, to an external computer, a request including a sub-domain of a tenant to which the user belongs. The request includes an address acquired from the domain name system 40. The request is routed by the communication device in the network N so as to be transmitted to one of the load balancers 20 that is in the same region as a region in which the user terminal 50 is located. For example, the transmission module 501 may transmit, to one of the regional systems 30 that manages data of a tenant, data of the tenant (for example, a file that the user wishes to register in the regional system 30), via one of the load balancers 20 that is in the region in which the user terminal 50 is located.

### [Receiving Module]

The receiving module 502 receives various types of data from a computer that is a communication partner of the user terminal 50. For example, the receiving module 502 receives, from the domain name system 40, an address relevant to a DNS request. The receiving module 502 receives, from one of the regional systems 30 that manages data of a tenant, data of the tenant via one of the load balancers 20 that is in the region in which the user terminal 50 is located.

### [4. Processing Executed in Multi-Tenant System]

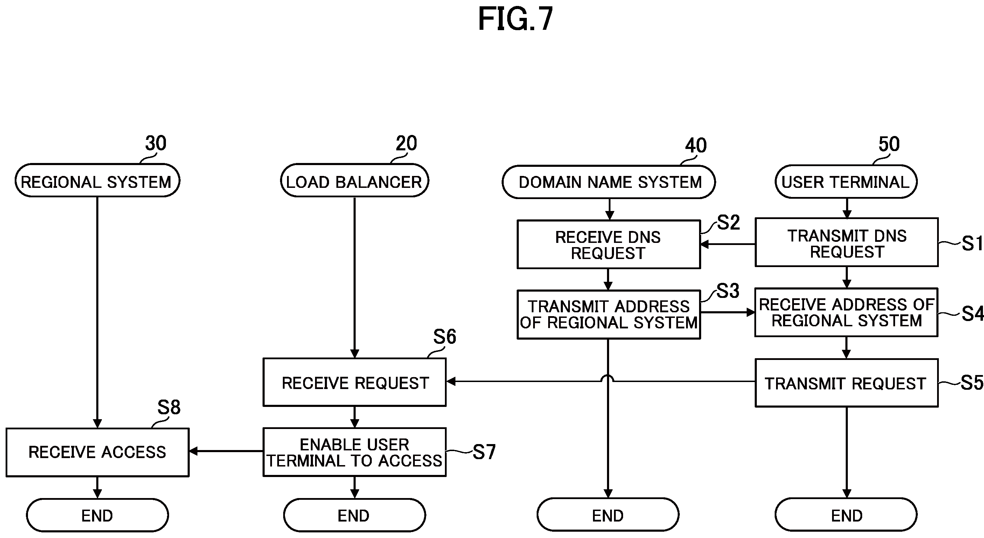

FIG. 7 is a diagram for illustrating an example of processing executed in the multi-tenant system 1. The processing of FIG. 7 is executed by the control units 21, 31, 41, and 51 by executing programs stored in the storage units 22, 32, 42, and 52, respectively. Although processing of the management server 10 is not illustrated in FIG. 7, prior to execution of the processing of FIG. 7, the management server 10 asks the domain name system 40 to register domain information and an address of a tenant, and the domain information and the address are stored in the address database DB.

As illustrated in FIG. 7, when a user inputs, on the browser of the user terminal 50, a URL including a sub-domain assigned to a tenant to which the user belongs, the user terminal 50 transmits a DNS request based on the URL to the domain name system 40 (Step S1). The domain name system 40 receives the DNS request from the user terminal 50 (Step S2). The domain name system 40 transmits, to the user terminal 50, an address of one of the regional systems 30 based on the address database DB (Step S3). The user terminal 50 receives the address of the regional system 30 from the domain name system 40 (Step S4).

The user terminal 50 transmits a request in which the URL input by the user and the address received in Step S4 are included (Step S5). As described above, the request is routed by the communication device in the network N so as to be transmitted to one of the plurality of load balancers 20 that is arranged in the same region as a region in which the user terminal 50 is located. The load balancer 20 receives the request from the user terminal 50 (Step S6).

The load balancer 20 enables the user terminal 50 to access one of the plurality of regional systems 30 that is indicated by the address received from the domain name system 40, based on the address included in the request (Step S7). The regional system 30 receives access from the user terminal 50 (Step S8), and this processing ends. Subsequently, data communication via the load balancer 20 is executed among the load balancer 20, the regional system 30, and the user terminal 50. The user terminal 50 downloads data of the tenant from the regional system 30. The user terminal 50 registers new data in the regional system 30, or executes update or deletion of existing data in the regional system 30. Communication for the registration, the update, or the deletion is mediated by the one of the load balancers 20 that is in the same region as the region in which the user terminal 50 is located.

### [5. Summary of Embodiment]

The multi-tenant system 1 according to this embodiment receives, from the user terminal 50, a request including a sub-domain that is assigned to one of the plurality of tenants. When receiving the request, the multi-tenant system 1 identifies the access destination regional system which manages data of the tenant to which the sub-domain included in the request is assigned. The multi-tenant system 1 enables the user terminal 50 to access the access destination regional system. The multi-tenant system 1 is capable of appropriate access control in a case in which data of each of a plurality of tenants is managed by one of the regional systems 30 in one of a plurality of regions, and a sub-domain is assigned to each of the plurality of tenants. When, for example, one tenant directly accesses one of the regional systems 30 that manages data of the tenant, from a region other than the region in which the one of the regional systems 30 is arranged, downloading of the data takes longer time because of the distance. The multi-tenant system 1 is capable of shortening the time required to download owing to control by one of the load balancers 20.

The multi-tenant system 1 also ensures that, for each of the plurality of tenants, a relationship between a sub-domain assigned to the tenant and an address of one of the regional systems 30 that manages data of the tenant is reflected in the domain name system 40. When receiving the request, the multi-tenant system 1 identifies the access destination regional system based on an address that is managed by the domain name system 40 and that is associated with the sub-domain included in the request. The multi-tenant system 1 is capable of appropriate access control by correctly identifying the access destination of the user terminal 50 with use of the domain name system 40. For example, managing information for access control in the address database DB of the domain name system 40 eliminates the need to manage the information on the part of the load balancers 20. The multi-tenant system 1 is accordingly capable of lightening a management load on the part of the load balancers 20. For example, with the user terminal 50 acquiring the address of the access destination regional system from the domain name system 40 before transmitting the request to one of the load balancers 20, the number of destination IP addresses of communication packets that may be received by the load balancer 20 from the user terminal 50 can be limited to the number of the regional systems 30. This also means that only as many rules as the number of the regional systems 30 are required for routing. When the number of rules is large, validation of the rules by the load balancers 20 takes time and latency of communication consequently increases. In the multi-tenant system 1 according to this embodiment, latency of communication can be suppressed because the number of rules is small. Latency of communication has a possibility of increasing also in a case in which the load balancers 20 acquire the address from the domain name system 40, but the multi-tenant system 1 according to this embodiment is capable of suppressing the latency of communication by acquiring the address by the user terminal 50.

### [6. Modification Examples]

The present disclosure is not limited to the example of the embodiment. The present disclosure can be modified without departing from the purport of the present disclosure.

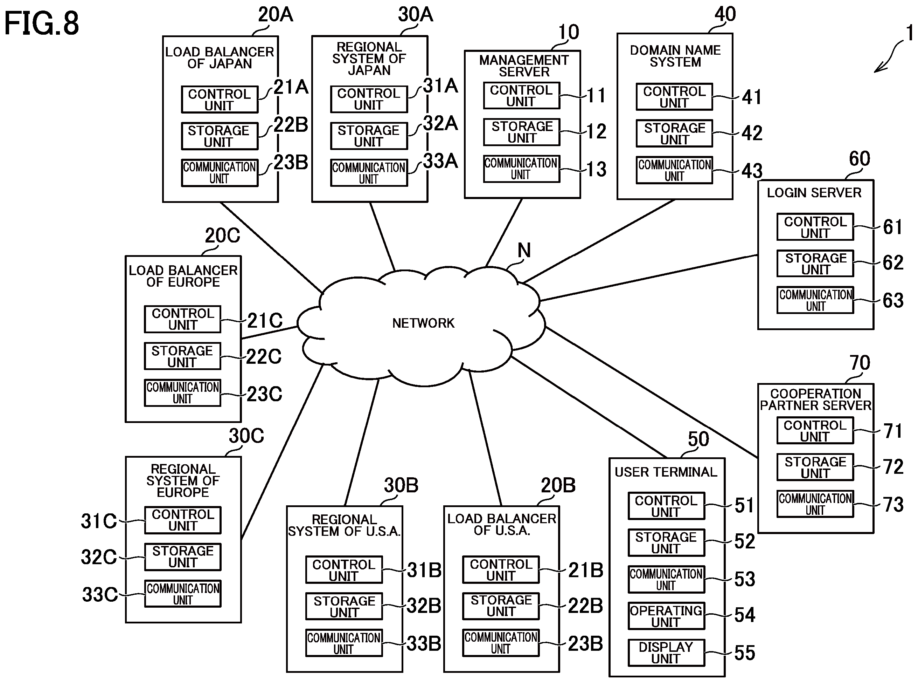

FIG. 8 is a diagram for illustrating an example of a hardware configuration in modification examples. The multi-tenant system 1 according to the modification examples includes a login server 60 and a cooperation partner server 70. The login server 60 and the cooperation partner server 70 are each a server computer. The login server 60 includes, for example, a control unit 61, a storage unit 62, and a communication unit 63. The cooperation partner server 70 includes, for example, a control unit 71, a storage unit 72, and a communication unit 73. The control units 61 and 71, the storage units 62 and 72, and the communication units 63 and 73 may have the same hardware configurations as the hardware configurations of the control unit 11, the storage unit 22, and the communication unit 13, respectively.

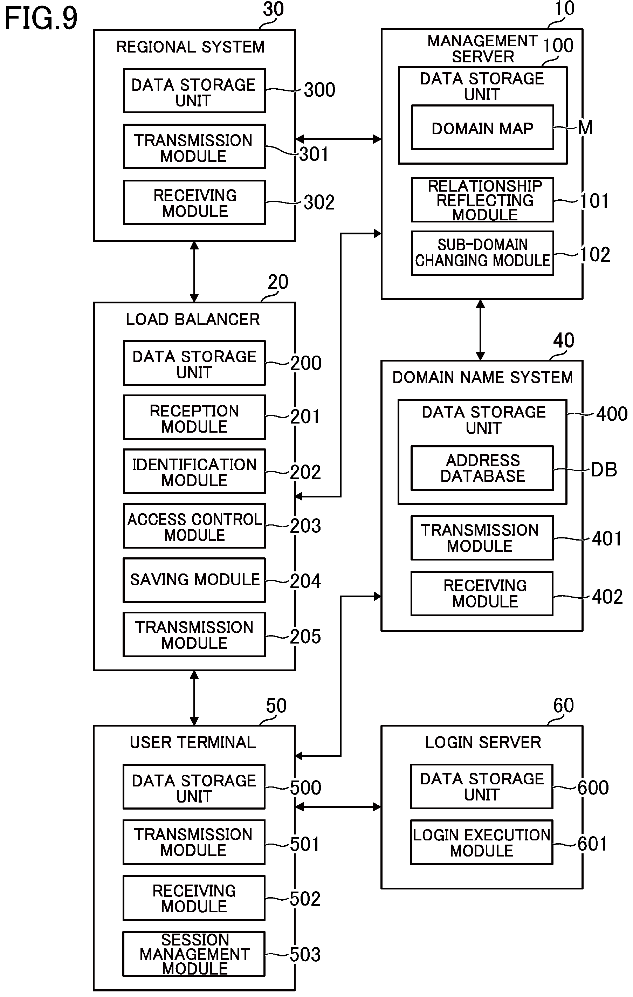

FIG. 9 is a diagram for illustrating an example of functions implemented in the modification examples. The management server 10 includes, for example, a sub-domain changing module 102. The sub-domain changing module 102 is implemented by the control unit 11. Each of the load balancers 20 includes a saving module 204 and a transmission module 205. The saving module 204 and the transmission module 205 are each implemented by the control unit 21. The user terminal 50 includes a session management module 503. The session management module 503 is implemented by the control unit 51. The login server 60 includes a data storage unit 600 and a login execution module 601. The data storage unit 600 is implemented by the storage unit 62. The login execution module 601 is implemented by the control unit 61.

### [6-1. Modification Example 1]

For example, as described a little in the embodiment, a user who belongs to a tenant may change, after the fact, a sub-domain assigned to the tenant. Modification Example 1 takes, as an example, a case in which a user who has administrative authority in a tenant changes the sub-domain. However, Modification Example 1 may be designed so that a user who does not particularly have administrative authority can change the sub-domain.

The management server 10 in Modification Example 1 includes the sub-domain changing module 102. The sub-domain changing module 102 changes, for each of the plurality of tenants, a sub-domain assigned to the tenant based on a request made by the tenant. The request is a request from the user terminal 50 of a user who has instructed to change the sub-domain. The request includes a new sub-domain (a post-change sub-domain) specified by the user. The user can specify any character string as a new sub-domain on another page reachable from the page P of FIG. 2.

For example, the sub-domain changing module 102 updates the domain map M so that a sub-domain assigned to a tenant is changed to a new sub-domain input by a user who has administrative authority of the tenant. The sub-domain changing module 102 changes, out of sub-domains in the domain map M, the sub-domain associated with the tenant identification information of the tenant to the new sub-domain included in the request. The sub-domain changing module 102 may ask one of the regional systems 30 that manages data of the tenant to change the sub-domain. When being asked by the management server 10, the regional system 30 may change the sub-domain of the tenant to the new sub-domain.

In the case in which the domain name system 40 is used as in the embodiment, the change of the sub-domain is reflected in the address database DB by the relationship reflecting module 101 as in Modification Example 2 described later. In a case in which the domain name system 40 is not used, the data storage unit 100 stores a relationship between a sub-domain and an address of one of the regional systems 30 as described in the embodiment. The relationship is an element of the domain map M or another database. The sub-domain changing module 102 may change a sub-domain in the other database. The sub-domain changing module 102 may determine whether the new sub-domain input by the user is already used, and change the sub-domain when the new sub-domain is not used yet.

When a request including the post-change sub-domain is received, the identification module 202 in Modification Example 1 identifies, as the access destination regional system, one of the regional systems 30 that manages data of a tenant to which the post-change sub-domain included in the request is assigned. Although Modification Example 1 differs from the embodiment in that the sub-domain included in the request is the post-change sub-domain, the rest of the processing in which the identification module 202 identifies the access destination regional system is as described in the embodiment. Processing of the identification module 202 in the case in which the domain name system 40 is used is described later in Modification Example 2. In the case in which the domain name system 40 is not used, the identification module 202 may identify the access destination regional system appropriate for the post-change sub-domain based on the domain map M or another database.

The multi-tenant system 1 according to Modification Example 1 changes, for each of the plurality of tenants, a sub-domain assigned to the tenant based on a request made by the tenant. When a request including the post-change sub-domain is received, the multi-tenant system 1 identifies, as the access destination regional system, one of the regional systems 30 that manages data of a tenant to which the post-change sub-domain included in the request is assigned. The multi-tenant system 1 is thus capable of appropriate access control even when a sub-domain is changed. A user who belongs to a tenant can change the sub-domain after the fact, and convenience of users is accordingly increased.

### [6-2. Modification Example 2]

For example, when a user who belongs to a tenant changes the sub-domain in Modification Example 1, the change of the sub-domain may automatically be reflected in the domain name system 40. When a sub-domain assigned to one of the plurality of tenants is changed, the relationship reflecting module 101 in Modification Example 2 operates so that the change of the sub-domain is reflected in the domain name system 40 which manages, for each of the plurality of tenants, a relationship between a sub-domain assigned to the tenant and an address of one of the regional systems 30 that manages data of the tenant.

For example, when a user who belongs to a tenant changes a sub-domain assigned to the tenant, the relationship reflecting module 101 transmits data indicating pre-change domain information, post-change domain information, and an address of one of the regional systems 30 that manages data of the tenant to the domain name system 40. The domain name system 40 updates the address database DB based on the data transmitted from the relationship reflecting module 101. Information included in the data is not limited to the example given above, as long as the data includes information by which the domain name system 40 can identify domain information to be changed and post-change domain information. For example, the address of the one of the regional systems 30 may be omitted from the data.

When a request including the post-change sub-domain is received, the identification module 202 in Modification Example 2 identifies the access destination regional system by acquiring an address that is associated with the post-change sub-domain included in the request. In Modification Example 2 as well, the user terminal 50 acquires the address associated with the post-change sub-domain from the domain name system 40 and includes the acquired address in the request. With the request including the address that is associated with the post-change sub-domain, the identification module 202 can identify the access destination regional system by referring to the included address. Although Modification Example 2 differs from the embodiment in that the sub-domain included in the request is the post-change sub-domain, the rest of the processing in which the identification module 202 identifies the access destination regional system is as described in the embodiment.

When a sub-domain assigned to one of the plurality of tenants is changed, the multi-tenant system 1 according to Modification Example 2 operates so that the change of the sub-domain is reflected in the domain name system 40 which manages, for each of the plurality of tenants, a relationship between a sub-domain assigned to the tenant and an address of one of the regional systems 30 that manages data of the tenant. When a request including the post-change sub-domain is received, the multi-tenant system 1 identifies the access destination regional system by acquiring an address that is associated with the post-change sub-domain included in the request. The multi-tenant system 1 is thus capable of appropriate access control by using the domain name system 40 even when a sub-domain is changed.

### [6-3. Modification Example 3]

For example, in a case in which one of the load balancers 20 mediates communication between the user terminal 50 of a user who belongs to a tenant and one of the regional systems 30 that manages data of the tenant, the load balancer 20 may temporarily save, out of the data, non-confidential data which has no confidentiality. In a case in which the user terminal 50, or the user terminal 50 of another user who belongs to the same tenant accesses the non-confidential data, the non-confidential data saved on the load balancer 20 may be transmitted to the user terminal 50.

Each of the load balancers 20 in Modification Example 3 includes the saving module 204 and the transmission module 205. The saving module 204 saves, out of data transmitted from the access destination regional system to the user terminal 50, non-confidential data which has no confidentiality in the data storage unit 200 of the load balancer 20, without saving confidential data which has confidentiality in the data storage unit 200. The load balancers 20 are an example of a device interposed between the user terminal 50 and the access destination regional system. The device may be a device other than the load balancers 20. For example, the device may be a server computer that is not called the load balancer 20. A publicly-known method is usable as a method itself of determining, for each piece of data of a tenant, whether the piece of data is classified as confidential data or non-confidential data. For example, data of a tenant may be associated with classification information indicating whether the data is confidential data or non-confidential data. In this case, the saving module 204 determines, based on the classification information that is associated with data received from one of the regional systems 30, whether the data is confidential data or non-confidential data. As another example, distinction between confidential data and non-confidential data may be made based on a URL of data of the tenant. Data that is included in a product from the beginning may be distinguished based on a URL to be handled as non-confidential data.

For example, the saving module 204 may determine, based on information other than the classification information, such as an extension of data received from one of the regional systems 30, whether the data is confidential data or non-confidential data. When it is determined that the data received from the regional system 30 is confidential data, the saving module 204 does not save the received data in the data storage unit 200. When it is determined that the received data is non-confidential data, the saving module 204 saves the received data in the data storage unit 200. Whether data of a tenant is classified as confidential data or non-confidential data may be determined by another computer such as one of the regional systems 30.

In a case in which the non-confidential data saved in the data storage unit 200 is requested again by the user terminal 50, the transmission module 205 in Modification Example 3 transmits the non-confidential data to the user terminal 50 without acquiring the non-confidential data from the regional system 30 again. Information indicating data that is requested by the user terminal 50 is included in a request from the user terminal 50. The information may be included in a URL, or may be included, in the request, as data separate from the URL. For example, the information may be a file name of a document file or the like.

When the reception module 201 receives a request from the user terminal 50, for example, the transmission module 205 identifies the data requested by the user terminal 50 based on the request. The transmission module 205 determines whether the identified data is stored in the data storage unit 200. When it is determined that the identified data is stored in the data storage unit 200, the transmission module 205 transmits the data stored in the data storage unit 200 to the user terminal 50. When it is determined that the identified data is not stored in the data storage unit 200, access control is executed by the access control module 203 in the same flow as in the embodiment. In this case, the regional system 30 transmits the requested data to the user terminal 50 via the load balancer 20.

The multi-tenant system 1 according to Modification Example 3 saves, out of data transmitted from the access destination regional system to the user terminal 50, non-confidential data which has no confidentiality in the data storage unit 200 of the load balancer 20, without saving confidential data which has confidentiality in the data storage unit 200. In the case in which the non-confidential data saved in the data storage unit 200 is requested again by the user terminal 50, the multi-tenant system 1 transmits the non-confidential data to the user terminal 50 without acquiring the non-confidential data from the regional system 30 again. The user terminal 50 can thus receive the non-confidential data quickly. For example, the page P is displayed in a shorter time. Another example of resultant benefits is lightening of a communication load on the network N because repetitive transmission of the same data on the network N is avoided.

### [6-4. Modification Example 4]

A common login page common to a plurality of tenants, for example, may be used to log in to the groupware by users who belong to the tenants. The common login page is a page that has the same URL including a sub-domain. In the case of the example of the URL in FIG. 2, the common login page has such a URL as "https://www.xxx-gate.com/" which shares a domain "xxx-gate.com" with the URL of the page P of the tenant. A sub-domain "www" of the common login page is common to a plurality of tenants. The sub-domain "www" of the common login page may be common to all tenants, or only some tenants. In Modification Example 4, the common login page is managed by the login server 60.

The common login page may have any URL, and is not limited to the example given above. For example, the common login page may have a domain different from the domain in URLs of the tenants. This enables, for example, a user who belongs to a plurality of tenants separate from one another to start logging in from the common login page as a member of any of the tenants. The common login page may be a page easy for users to remember, and may function as a simple gate which is not involved in communication subsequent to authentication for logging in.

In Modification Example 4, login processing using the URL "https://www.xxx-gate.com/" of the common login page is executed between the user terminal 50 and the login server 60. Modification Example 4 takes a case in which the login server 60 executes login as an example, but another computer which is a computer other than the login server 60 may execute login. For example, the management server 10 may execute the login processing. In the case in which the management server 10 executes the login processing, the user terminal 50 holds communication to and from the management server 10 via one of the load balancers 20 to execute the login processing. The URL of the common login page may be a URL of the other computer. For example, the user inputs an account and a password of the user on the common login page to log in to the groupware. Any type of authentication (for example, authentication by an electronic certificate) other than password authentication may be executed on the common login page.

For example, the user uses an account name such as "user00001@aaa.xxx-gate.com" to log in to the groupware. The account name may be an email address but, in Modification Example 4, is not an email address. A part of the account name that precedes "@" is user identification information by which the management server 10 is capable of identifying the user. A part of the account name that follows "@" includes a sub-domain assigned to a tenant to which the user belongs, and a domain. "@" is a mark used by the management server 10 to distinguish user identification information, a sub-domain, and a domain from one another. The mark may be a mark other than "@". For example, **"+", "%", "¥",** or another mark may be used to distinguish user identification information, a sub-domain, and a domain from one another.

The login server 60 in Modification Example 4 includes a data storage unit 600 and a login execution module 601. The data storage unit 600 stores data of the common login page and a database required for login (for example, a database in which a user ID and a password are stored). The login execution module 601 executes logging in to a specific tenant based on input information which is input on the common login page common to a plurality of tenants. The input information is information for authentication at the time of logging in. Processing up through display of the common login page is executed irrespective of whether the user has logged in to a specific tenant. For example, the login execution module 601 displays the common login page on the user terminal 50. Data (for example, HTML data) required to display the common login page is stored in the data storage unit 600. The login execution module 601 transmits the data to the user terminal 50, to thereby display the common login page on the user terminal 50.

In a case in which the user has not logged in to the tenant, for example, the login execution module 601 executes authentication for logging in, based on the account name and the password (an example of the input information) input on the common login page. In a case in which the authentication has been successful, or the user has already logged in, a redirect to a page of the tenant occurs. The data storage unit 600 stores a database storing an account name and a password that are a correct answer in authentication. However, a cost of a search may be reduced by storing a user database for each tenant in the data storage unit 600, and employing a flow in which the login execution module 601 first identifies a tenant from a domain including a sub-domain, searches the tenant for the user of interest, and attempts authentication when the user of interest is found. The reception module 201 in Modification Example 4 receives a request from the user terminal 50 that has succeeded in logging in from the common login page. Modification Example 4 differs from the embodiment in that logging in on the common login page is executed, but the processing of the reception module 201 itself is as described in the embodiment.

In the example of the account name in Modification Example 4, the sub-domain is included after "@", and the login server 60 may accordingly use a relevant one of the load balancers 20 to redirect the user terminal 50 at completion of logging in. At the time of the redirect, the load balancer 20 acquires the sub-domain from the user terminal 50 or the login server 60. Processing after the load balancer 20 acquires the sub-domain is the same as in the embodiment. The multi-tenant system 1 may be designed so that at least one of the load balancer 20, the regional system 30, or the login server 60 stores data indicating that authentication of the user terminal 50 has been completed, in order to prevent recurrence of logging in.

The multi-tenant system 1 according to Modification Example 4 executes login to a specific tenant based on the input information input on the common login page common to a plurality of tenants. The multi-tenant system 1 receives a request from the user terminal 50 that has succeeded in logging in on the common login page. The multi-tenant system 1 is capable of integrating pages that serve as entrances to the groupware into one in the form of the common login page.

### [6-5. Modification Example 5]

For example, there is a case in which a user belongs to a plurality of tenants. Modification Example 5 takes, as an example, a case in which a user belongs to a tenant "central office of AAA Co., Ltd. in Japan" and a tenant "U.S. branch office of AAA Co., Ltd." A case in which data of the tenant "central office of AAA Co., Ltd. in Japan" is managed by the regional system 30A of Japan and data of the tenant "U.S. branch office of AAA Co., Ltd." is managed by the regional system 30B of the U.S.A. is taken as an example.

When the user executes login for accessing the data of the tenant "central office of AAA Co., Ltd. in Japan" and login for accessing the data of the tenant "U.S. branch office of AAA Co., Ltd.," for example, the user can access the data of both tenants at the same time. In Modification Example 5, logging in may be executed on the common login page as in Modification Example 4, or on login pages provided on a sub-domain-by-sub-domain basis. A user may belong to three or more tenants. Pieces of data of a plurality of tenants to which a user belongs may be managed in the same region as one another.

The user terminal 50 in Modification Example 5 includes the session management module 503. In a case in which a user belongs to more than one tenant out of the plurality of tenants, the session management module 503 manages respective sessions of the more than one tenant to which the user belongs as sessions separate from one another. The session management module 503 manages a key of a session ID for each tenant. A relationship between a tenant and a key of a session ID is recorded in the data storage unit 500. A key of a session ID is managed with use of, for example, a cookie of a browser. The data storage unit 300 of a relevant one of the regional systems 30 also stores the same key as the key of the session ID stored in the user terminal 50, or information for validation of the key. Keys of session IDs are stored in respective cookies of the tenants, to thereby maintain sessions separate from one another. A publicly-known method may be used to establish a session.

Management of sessions by the session management module 503 enables the user terminal 50 to, for example, simultaneously display respective pages of the plurality of tenants to which the user belongs. "Simultaneous display" is displayed on separate tabs in the same window, or display in a plurality of windows. Display in those manners is enabled without requiring logging out. The user terminal 50 displays, in a state in which a page of a first tenant to which a user belongs is displayed on a first tab in a window of a browser, a page of a second tenant to which the user belongs on a second tab in the window, without being required to log out with respect to the user's account of the first tenant. The user terminal 50 displays, in a state in which a page of a first tenant to which a user belongs is displayed in a first window of a browser, a page of a second tenant to which the user belongs in a second window of the browser, without being required to log out with respect to the user's account of the first tenant.

For example, the user terminal 50 displays, in a state in which a page indicating data managed by the regional system 30B of the U.S.A. is displayed on the user terminal 50, a page indicating data managed by the regional system 30A of Japan on the user terminal 50, without the user being required to log out in an account name of the tenant "U.S. branch office of AAA Co., Ltd." The user terminal 50 displays the page indicating the data managed by the regional system 30A of Japan, without executing exclusive control for login based on an account name of the tenant "central office of AAA Co., Ltd. in Japan" and login based on the account name of the tenant "U.S. branch office of AAA Co., Ltd." (that is, with the respective sessions maintained).

For example, the user terminal 50 displays, in a state in which a page indicating data managed by the regional system 30A of Japan is displayed on the user terminal 50, a page indicating data managed by the regional system 30B of the U.S.A. on the user terminal 50, without the user being required to log out in the account name of the tenant "central office of AAA Co., Ltd. in Japan." The user terminal 50 displays the page indicating the data managed by the regional system 30B of the U.S.A., without executing exclusive control for login based on the account name of the tenant "central office of AAA Co., Ltd. in Japan" and login based on the account name of the tenant "U.S. branch office of AAA Co., Ltd." (that is, with the respective sessions maintained).

The multi-tenant system 1 according to Modification Example 5 manages, in a case in which a user belongs to more than one tenant out of the plurality of tenants, respective sessions of the more than one tenant to which the user belongs as sessions separate from one another. The multi-tenant system 1 can thus increase convenience of the user. For example, the user can check a page of one tenant and a page of another tenant on separate tabs or windows at the same time. Some systems according to the related art can only display a page of an account of one tenant. With this type of system, the user is forced to switch accounts each time. The multi-tenant system 1 according to Modification Example 5 is capable of saving the user the trouble of switching accounts.

### [6-6. Modification Example 6]

For example, the embodiment takes, as an example, the case in which, when a user who belongs to a tenant inputs a URL including a sub-domain assigned to the tenant on the browser, one of the load balancers 20 receives a request including the URL. The load balancer 20 may receive another request from a computer. When receiving the other request, the load balancer 20 may execute access control so that the computer accesses an appropriate access destination.

Modification Example 6 takes, as an example, processing in a case in which the groupware "XXX groupware" described in the embodiment cooperates with another groupware "ZZZ groupware." The cooperation partner server 70 connected to the network N in the example of FIG. 8 is a server computer of the other groupware "ZZZ groupware."

Modification Example 6 takes, as an example, a case in which an operating company of the groupware "XXX groupware" and an operating company of the other groupware "ZZZ groupware" are separate from each other. The multi-tenant system 1 mainly includes computers managed by the operating company of the groupware "XXX groupware" and, accordingly, in the example of FIG. 8, the cooperation partner server 70 exists outside of the multi-tenant system 1.

The operating company of the groupware "XXX groupware" and the operating company of the other groupware "ZZZ groupware" may be the same as each other. That is, the processing described in Modification Example 6 may be applied to the multi-tenant system 1 in which a plurality of pieces of groupware provided by the same operating company cooperate with one another. In this case, the cooperation partner server 70 may be included in the multi-tenant system 1.

A user who belongs to, for example, a tenant that has signed up to both of the groupware "XXX groupware" and the other groupware "ZZZ groupware" can use both of the two on his or her user terminal 50. When the user inputs a URL of the other groupware "ZZZ groupware" on a browser of the user terminal 50, the user terminal 50 accesses the cooperation partner server 70 to display a page of the other groupware "ZZZ groupware" on the display unit 55. The user can use, from this page, various functions provided by the other groupware "ZZZ groupware."

The processing of each of the load balancers 20 in the embodiment is processing for enabling the user terminal 50 to access data managed by the groupware "XXX groupware." For that reason, the processing of each of the load balancers 20 in the embodiment is not executed when the user terminal 50 accesses data managed by the other groupware "ZZZ groupware." Processing for enabling the user terminal 50 to access data managed by the other groupware "ZZZ groupware" may be publicly-known processing.

For example, the user can display, on the page of the other groupware "ZZZ groupware," data managed by the groupware "XXX groupware" through a cooperation function of cooperation between the groupware "XXX groupware" and the other groupware "ZZZ groupware." This cooperation function is implemented by an API prepared on the groupware "XXX groupware" side. In Modification Example 6, appropriate access control is executed by each of the load balancers 20 also when such an API is used.

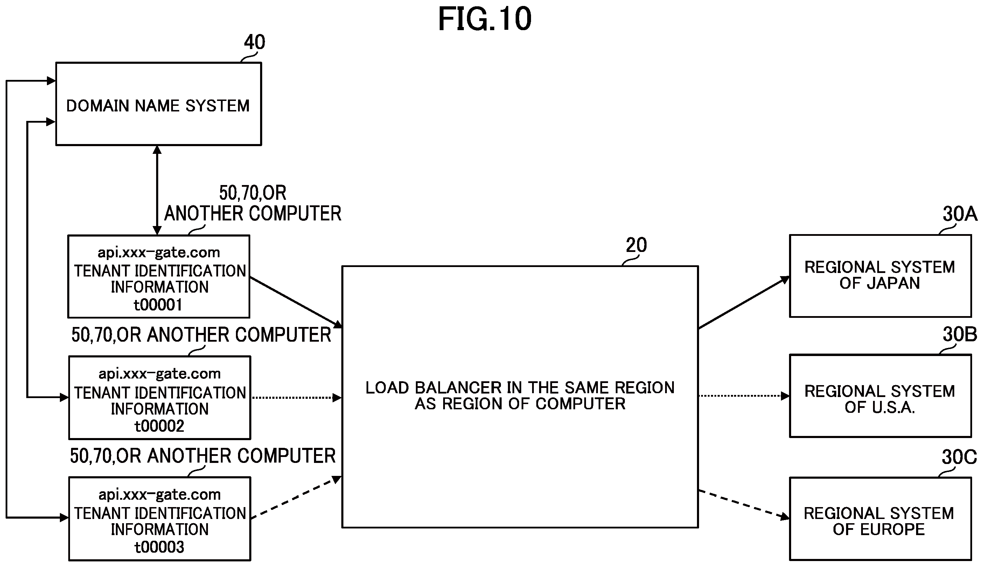

FIG. 10 is a diagram for illustrating an example of access control in Modification Example 6. The reception module 201 in Modification Example 6 may receive a request that is issued from a computer (for example, the user terminal 50 or the cooperation partner server 70) to an API endpoint common to a plurality of tenants, and that includes tenant identification information indicating one of the plurality of tenants. The API endpoint is a final point in API connection on the groupware "XXX groupware" side.

The computer that transmits the request can be any computer as in the embodiment. The reception module 201 in Modification Example 6 may receive the request from a computer other than the user terminal 50 and the cooperation partner server 70. The computer that transmits the request may execute predetermined authentication (for example, OAuth authentication) in advance. In this case, the computer may store information indicating that the predetermined authentication has been executed (for example, a client ID in OAuth authentication). At the time of transmitting the request, validity of the information may be checked.

In the example of FIG. 10, the request to the API endpoint is identified from a sub-domain "api" and the domain "xxx-gate.com." However, a relevant one of the load balancers 20 cannot identify one of the regional systems 30 that is the access destination (that is, access to data of which tenant is requested) from this information alone. Accordingly, the request in Modification Example 6 includes tenant identification information. When the request to the common API endpoint is received, the identification module 202 in Modification Example 6 identifies the access destination regional system based on the tenant identification information. As the tenant identification information, a sub-domain may be used instead of an ID of FIG. 10.

For example, the identification module 202 in Modification Example 6 acquires the regional system identification information that is associated with the tenant identification information included in the request, based on the domain map M. In the case in which the domain map M is managed by the management server 10 as in the embodiment, the identification module 202 requests, from the management server 10, the regional system identification information that is associated with the tenant identification information included in the request. The management server 10 refers to the domain map M, and transmits the regional system identification information that is associated with the tenant identification information to the load balancer 20.

The identification module 202 identifies the access destination regional system based on, for example, the transmitted regional system identification information. In the case in which a sub-domain is used as tenant identification information, the identification module 202 in Modification Example 6 may acquire the address of the access destination regional system based on a request including the address that has been acquired by the user terminal 50 from the domain name system 40, as in the embodiment. Further, in the case in which each of the load balancers 20 stores the domain map M or a database similar to the address database DB, the identification module 202 may identify the access destination regional system without issuing an inquiry to an external computer.

The access control module 203 in Modification Example 6 enables the computer that has transmitted the request to access the access destination regional system identified by the identification module 202. The access control module 203 performs control that is in most part as described in the embodiment. However, in a case in which the computer that has transmitted the request is the cooperation partner server 70, the access control module 203 transmits data managed by the regional system 30 to the cooperation partner server 70. The cooperation partner server 70 receives the data, and displays the data managed by the "XXX groupware" on the page of the "ZZZ groupware." The data managed by the "XXX groupware" is displayed on the page of the "ZZZ groupware" through control performed by the computer that has transmitted the request.

Although the case in which a plurality of pieces of groupware cooperate with one another is taken as an example in Modification Example 6, the flow of the API in Modification Example 6 may be used in various other scenes. For example, in a case in which the groupware "XXX groupware" cooperates with a data management service that is not groupware or with a shared email service as well, those services may cooperate in the same flow of the API.

The multi-tenant system 1 according to Modification Example 6 receives, from a computer, a request that is issued to an API endpoint common to a plurality of tenants and that includes tenant identification information indicating one of the plurality of tenants. When receiving the request to the common API endpoint, the multi-tenant system 1 identifies the access destination regional system based on the tenant identification information. The multi-tenant system 1 is capable of appropriately executing access control via the API endpoint. This enables, for example, cooperation of a plurality of pieces of groupware with one another.

### [6-7. Other Modification Examples]

For example, the modification examples described above may be combined.

For example, although the embodiment takes, as an example, the case in which the user terminal 50 acquires the address of the access destination regional system from the domain name system 40 before transmitting a request to one of the load balancers 20, the load balancer 20 may acquire the address of the access destination regional system from a domain map within the system. In this case, the user terminal 50 is not required to acquire, in advance, the address of the access destination regional system from the domain name system 40. As another example, the load balancer 20 may acquire the address of the access destination regional system by referring to an address database stored in the load balancer 20.

For example, some of the functions described as functions that are implemented by each of the load balancers 20 may be implemented by another computer such as the management server 10. The functions described as functions that are implemented by each of the load balancers 20 may be divided among a plurality of computers.

## Claims

1. A multi-tenant system, in which data of each of a plurality of tenants is managed by a regional system of one of a plurality of regions, and a sub-domain is assigned to each of the plurality of tenants, the multi-tenant system comprising:
a reception module configured to receive, from a computer, a request including the sub-domain that is assigned to one of the plurality of tenants;
an identification module configured to identify, when the request is received, an access destination regional system that is the regional system and that manages the data of the one of the plurality of tenants to which the sub-domain included in the request is assigned; and
an access control module configured to enable the computer to access the access destination regional system.

2. The multi-tenant system according to claim 1, further comprising a relationship reflecting module configured to operate so that, for each of the plurality of tenants, a relationship between the sub-domain assigned to the each of the plurality of tenants and an address of the regional system that manages the data of the each of the plurality of tenants is reflected in a domain name system,
wherein the identification module is configured to identify, when the request is received, the access destination regional system, based on the address that is managed by the domain name system and that is associated with the sub-domain included in the request.

3. The multi-tenant system according to claim 1 or 2, further comprising a sub-domain changing module configured to change, based on a request from each of the plurality of tenants, the sub-domain assigned to the each of the plurality of tenants,
wherein the identification module is configured to identify, as the access destination regional system, when the request including a post-change sub-domain which is the sub-domain after the change is received, the regional system that manages the data of one of the plurality of tenants to which the post-change sub-domain included in the request is assigned.

4. The multi-tenant system according to claim 3, further comprising a relationship reflecting module configured to operate so that, when the sub-domain assigned to one of the plurality of tenants is changed, the change of the sub-domain is reflected in a domain name system for managing a relationship between the sub-domain assigned to each of the plurality of tenants and an address of the regional system that manages the data of the each of the plurality of tenants,
wherein the identification module is configured to identify, when the request including a post-change sub-domain which is the sub-domain after the change is received, the access destination regional system, by acquiring, from the domain name system, the address that is associated with the post-change sub-domain included in the request.

5. The multi-tenant system according to claim 1 or 2, further comprising:
a saving module configured to save, out of the data transmitted from the access destination regional system to the computer, non-confidential data which has no confidentiality in a data storage unit of a device interposed between the computer and the access destination regional system, without saving confidential data which has confidentiality in the data storage unit; and
a transmission module configured to transmit, when the non-confidential data saved in the data storage unit is requested again by the computer, the non-confidential data to the computer, without acquiring the non-confidential data from the regional system again.

6. The multi-tenant system according to claim 1 or 2, further comprising a login execution module configured to execute login to a specific one of the plurality of tenants, based on input information that is input on a common login page which is common to the plurality of tenants,
wherein the reception module is configured to receive the request from the computer successful in logging in from the common login page.

7. The multi-tenant system according to claim 1 or 2, further comprising a session management module configured to manage, when a user belongs to more than one tenant out of the plurality of tenants, respective sessions of the more than one tenant to which the user belongs, as sessions separate from one another.

8. The multi-tenant system according to claim 1 or 2,
wherein the reception module is configured to receive, from the computer, a request to an API endpoint common to the plurality of tenants, the request including tenant identification information indicating one of the plurality of tenants, and
wherein the identification module is configured to identify, when the request to the common API endpoint is received, the access destination regional system based on the tenant identification information.

9. An access control method, comprising:
receiving, when data of each of a plurality of tenants is managed by a regional system of one of a plurality of regions, and a sub-domain is assigned to each of the plurality of tenants, from a computer, a request including the sub-domain that is assigned to one of the plurality of tenants;
identifying, when the request is received, an access destination regional system that is the regional system and that manages the data of the one of the plurality of tenants to which the sub-domain included in the request is assigned; and
enabling the computer to access the access destination regional system.

10. A program for causing a computer to function as:
a reception module configured to receive, when data of each of a plurality of tenants is managed by a regional system of one of a plurality of regions, and a sub-domain is assigned to each of the plurality of tenants, from a computer, a request including the sub-domain that is assigned to one of the plurality of tenants;
an identification module configured to identify, when the request is received, an access destination regional system that is the regional system and that manages the data of the one of the plurality of tenants to which the sub-domain included in the request is assigned; and
an access control module configured to enable the computer to access the access destination regional system.
